# DEMANDE DE BREVET EUROPEEN

(11) **EP 3 964 341 A1**
(43) Date de publication de la demande: **09.03.2022**
(21) Numéro de dépôt: 20194767.8
(22) Date de dépôt: 07.09.2020
(51) Int. Cl.: B29C 33/00, B29C 43/36, B29C 43/18, B29C 43/02, B29L 23/20

(54) **DISPOSITIF POUR LA FABRICATION DE TUBES AVEC UNE GEOMETRIE D'ORIFICE DE SECTION NON CIRCULAIRE ET PROCEDE DE FABRICATION**

(71) Demandeur: Aisapack Holding SA, 1896 Vouvry (CH)
(72) Inventeur: FAVRE, Dominique, 1873 Val d'Illiez (CH)
(74) Mandataire: Grosfillier, Philippe

(57) **Abrégé**

L'invention concerne notamment un dispositif de moulage d'un article dans lequel l'article est obtenu par compression-moulage d'une dose (14) de matière à l'état fondu et comprend au moins un orifice (23) après l'opération de compression-moulage, ledit dispositif comprenant au moins une matrice (10), un mandrin (11) coopérant avec ladite matrice (10) pour effectuer l'opération de compression moulage de la dose et une tige d'orifice (12) coulissant dans ladite matrice (10), ledit dispositif comprenant en outre un embout de forme (13) placé entre le mandrin (11) et la tige d'orifice (12) pour former l'orifice (23) de l'article.

## Description

### DOMAINE TECHNIQUE

La présente invention concerne des tubes dont les têtes sont réalisées par compression moulage ; l'opération de moulage étant utilisée également pour souder la jupe tubulaire sur la tête de tube. La présente invention permet de réaliser des géométries d'orifice dont la section n'est pas circulaire et s'applique dans le domaine de l'emballage et en particulier dans celui des tubes flexibles destinés à contenir des crèmes ou pâtes comme du dentifrice. L'invention concerne également un procédé pour produire cette tête et un tube avec une telle tête.

### ETAT DE LA TECHNIQUE

Les têtes de tubes réalisées par compression moulage d'une dose de résine à l'état fondu sont connues depuis de nombreuses années et décrites par exemple dans la publication WO 2007/125481 dont le contenu est incorporé par référence dans la présente demande. Ces têtes de tubes sont soudées à la jupe du tube conjointement à l'opération de compression moulage formant la tête à partir d'une dose de matière. Dans ce procédé, l'opération de soudage ne nécessite pas d'apport de chaleur autre que celui de la résine fondue utilisée pour mouler la tête de tube. Le tube obtenu par ce procédé présente des propriétés esthétiques avantageuses de la zone de soudure ; en particulier la transition entre la jupe et la tête de tube forme une surface lisse et continue. Sur ces emballages, la zone de transition entre la jupe du tube et la tête de tube n'est pas perceptible par l'utilisateur, ce qui représente un grand intérêt pour les tubes utilisés dans le domaine des produits cosmétiques. Cependant, avec les dispositif connus dans l'art antérieur, il n'est pas possible de réaliser des orifices de section non-circulaire dans la tête de tube.

L'invention permet notamment de remédier à cet inconvénient.

### SOMMAIRE ET PRINCIPE DE L'INVENTION

L'invention porte notamment sur des moyens et des procédés de fabrication d'un tube dont la tête est réalisée par compression moulage et dont l'orifice servant à l'extraction du produit est de section non circulaire et/ou orientée et/ou de section complexe et/ou comprend une pluralité d'orifices de formes différentes. Les moyens et procédés selon l'invention permettent également d'optimiser la répartition de la matière et d'éviter des défauts sur les têtes produites.

L'invention porte également sur un tube dont la géométrie de l'orifice est orientée par exemple par rapport à une impression sur la jupe, ou par rapport au bouchon.

L'invention porte également sur un tube ayant une géométrie d'orifice de section complexe ou une pluralité d'orifices de formes différentes.

Le tube selon l'invention se caractérise notamment par une face supérieure du goulot avec une surface centrale et une surface périphérique ; l'orifice débouchant dans la surface centrale ; et les deux surfaces étant décalées l'une par rapport à l'autre.

L'invention porte également sur un tube comportant plusieurs orifices.

L'invention porte également sur un procédé de réalisation de l'invention.

### REFERENCES NUMERIQUES ET BREVE DESCRIPTION DES DESSINS

- 1: : tube
- 2 :: tête de tube
- 3 :: jupe
- 4 :: orifice
- 5 :: zone de transition
- 6 :: surface externe de la jupe 3
- 7 : 8 :: moyens de fixation (par exemple pour un bouchon)
- 9 :: surface périphérique10 : matrice
- 11 :: mandrin
- 12 :: tige d'orifice
- 13 :: embout de forme
- 14 ::
- 15 ::
- 16 ::
- 17 ::
- 18 ::
- 19 :20 :: tube
- 21 :: tête de tube
- 22 :: jupe
- 23, 23a, 23b, 23c, 23d :: orifice
- 24 :: moyens de fixation (p.ex. filetage)
- 25 :: surface interne
- 26 :: surface périphérique
- 27 :: creux
- 28 :: excroissance
- 29 :: élément de guidage en translation
- 30 :: élément de mise en pression
- 31 :: élément de mise en pression
- 32 :: butée de sortie de tige
- 33 :: butée de transition
- 34 :: butée de de position relative tige - douille
- 35 :: butée de de position relative tige - douille
- 36 :: butée alignement douille - matrice
- 37 :: douille
- 38 :: alignement - douille matrice

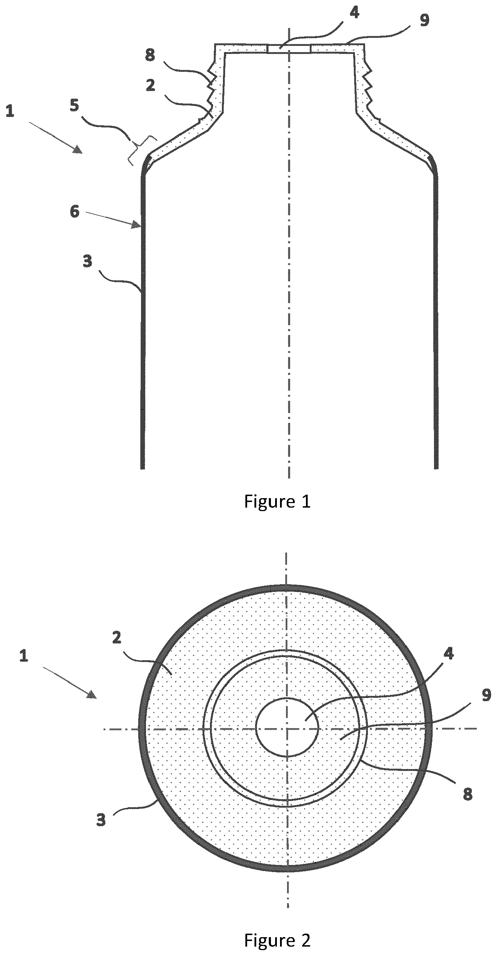

### Etat de la technique (figures 1 et 2)

La figure 1 illustre un tube réalisé selon l'art antérieur. Ce tube 1 composé d'une tête de tube 2, d'une jupe 3 surmoulée par compression moulage et d'un orifice de section circulaire 4. La tête comprend en outre des moyens de fixation pour un bouchon, par exemple un filetage 8 et une surface périphérique 9. La référence 5 indique la zone de transition entre la tête 2 et la jupe 3 qui forme une surface lisse et continue grâce au procédé de fabrication de compression moulage.

La figure 2 illustre en vue de dessus le tube 1 de l'art antérieur. Sur cette représentation, on visualise la géométrie circulaire de l'orifice 4 correspondant à l'art antérieur.

Les moyens et le procédé permettant d'obtenir le tube des figures 1 et 2 sont décrits dans la publication WO2007/125481 incorporée par référence dans la présente demande, notamment dans les figures 1 à 8 et la description de ces figures.

### Modes d'exécution de l'invention

Les figures 3 à 6 et 18 illustrent des modes d'exécution de dispositifs en coupe selon la présente invention permettant de réaliser des têtes de tubes et des tubes.

Les figures 7 à 11 illustrent des modes d'exécution de têtes et de tubes et géométries d'orifice selon l'invention en coupe et en vues de dessus.

La figure 12 illustre une caractéristique des tubes au niveau de la zone de transition entre la tête de tube.

Les figures 13 à 17 illustrent des modes d'exécution de moyens utilisés dans des dispositifs selon la présente invention.

Dans des modes d'exécution, l'invention concerne un dispositif de moulage d'un article dans lequel l'article est obtenu par compression-moulage d'une dose de matière à l'état fondu et comprend au moins un orifice après l'opération de compression-moulage, le dispositif comprenant au moins une matrice, un mandrin coopérant avec ladite matrice pour effectuer l'opération de compression moulage de la dose et une tige d'orifice coulissant dans ladite matrice, le dispositif comprenant en outre un embout de forme placé entre le mandrin et la tige d'orifice pour former l'orifice de l'article.

Dans des modes d'exécution de l'invention, l'embout de forme peut être sur la tige, ou sur le mandrin ou partiellement sur la tige et partiellement sur le mandrin.

Dans des modes d'exécution de l'invention, le dispositif comprend au moins un moyen pour maintenir en contact le mandrin et la tige d'orifice au travers de l'embout de forme.

Dans des modes d'exécution de l'invention, le moyen peut être un ressort mécanique ou pneumatique.

Dans des modes d'exécution de l'invention, le dispositif comprend une butée de sortie de tige réglant l'amplitude du mouvement axial de la tige.

Dans des modes d'exécution de l'invention, le dispositif comprend un deuxième élément de mise en pression pour exercer une pression élevée en fin de moulage, ledit deuxième élément étant un vérin de faible course.

Dans des modes d'exécution de l'invention, le dispositif comprend une butée de transition pour commuter de la faible pression exercée par le premier élément de mise en pression à la haute pression exercée par le deuxième élément de mise en pression.

Dans des modes d'exécution de l'invention, le dispositif comprend une douille pour centrer la dose.

Dans des modes d'exécution, l'invention concerne un procédé de formation d'un article avec un orifice à partir d'une dose de matière à l'état fondu, ledit procédé utilisant une matrice coopérant avec un mandrin, une tige d'orifice et un embout de forme placé entre le mandrin et la tige d'orifice, l'article étant formé par compression-moulage de la dose entre la matrice et le mandrin et l'orifice de l'article étant créé par l'embout de forme entouré de matière lors de l'opération de compression-moulage.

Dans des modes d'exécution de l'invention, on utilise un premier moyen de mise en pression pour mettre en contact l'embout de forme, le mandrin et la tige d'orifice lors de la fermeture du moule et un deuxième moyen pression pour exercer une pression élevée en fin de moulage.

Dans des modes d'exécution de l'invention, on utilise une butée de transition pour commuter de la pression exercée par le premier moyen de mise en pression à la pression exercée par le deuxième moyen de mise en pression.

Dans des modes d'exécution, l'invention concerne un article comprenant au moins une surface centrale, une surface périphérique et un orifice formé par un embout de forme, l'orifice débouchant dans la surface centrale et lesdites surfaces centrale et périphérique étant décalées l'une par rapport à l'autre. Dans des modes d'exécution de l'invention, le décalage entre les surfaces forme un creux ou une excroissance.

Dans des modes d'exécution de l'invention, l'orifice comprend au moins deux orifices distincts ayant une même géométrie ou une géométrie différente.

Dans des modes d'exécution de l'invention, l'article peut être une tête de tube ou un tube.

### DESCRIPTION DETAILLEE

La figure 1 illustre un tube réalisé selon l'art antérieur. Ce tube 1 est composé au moins d'une tête de tube 2, d'une jupe 3 surmoulée par compression moulage et d'un orifice de section circulaire 4. La tête de tube 2 est fabriquée par compression moulage d'une dose de matière plastique à l'état fondu. La jupe 3 est assemblée à la tête de tube 2 lors du moulage de la tête par une opération dite de surmoulage consistant à positionner la jupe dans le moule et à utiliser la chaleur de la matière plastique moulée pour effectuer l'assemblage entre la tête de tube 2 et la jupe 3. Les tubes de l'art antérieur réalisés selon ce procédé présentent l'avantage d'avoir une zone de transition 5 parfaite entre la jupe 3 et la tête de tube 2. Pour cette raison, ces tubes sont souvent utilisés dans le domaine cosmétique où les critères esthétiques de l'emballage sont de première importance.

La figure 2 illustre le tube 1 de l'art antérieur en vue de dessus. On observe en particulier la géométrie de l'orifice 4 qui forme une ouverture de section circulaire. Cet orifice 4 est utilisé pour extraire le produit de l'emballage.

Néanmoins, il est souhaité dans certains cas de fabriquer des tubes ayant une tête dont l'orifice est de section différente, c'est-à-dire notamment non-circulaire et ayant par exemple une forme quelconque ou bien présentant plusieurs orifices de forme quelconque, soit pour des raisons de praticité soit pour des raisons de marketing ou pour d'autres raisons, par exemple découlant du produit contenu dans le tube et/ou de son utilisation. Le dispositif connu de WO2007/125481 ne permettant pas une telle liberté, celui-ci est modifié selon l'invention décrite ci-dessous.

Un but de la présente invention est donc d'améliorer les produits et procédés connus.

Plus précisément, un but de la présente invention est de proposer des moyens permettant de réaliser par compression-moulage un récipient sous forme de tube ayant un orifice de forme quelconque.

Un autre but de la présente invention est de proposer une solution simple, fiable et qui puisse se monter facilement dans des machines actuellement en service. Il est donc nécessaire d'éviter une solution et des moyens radicalement différents mais plutôt de proposer des moyens facilement applicables aux machines actuelles.

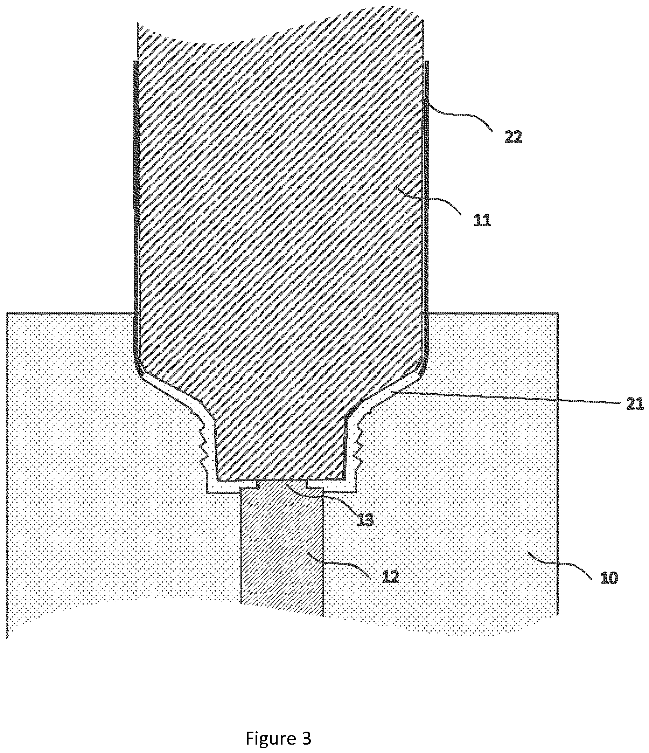

Ainsi, la figure 3 illustre un mode d'exécution d'un dispositif selon l'invention pour réaliser une tête de tube ou un tube selon l'invention dans lesquels la section de l'orifice n'est pas circulaire. Ce dispositif comprend un moule comprenant au moins une matrice 10, un mandrin 11, une tige d'orifice 12 et un embout de forme 13. La tige d'orifice 12 coulisse dans la matrice 10 et comporte ledit embout de forme 13 à son extrémité.

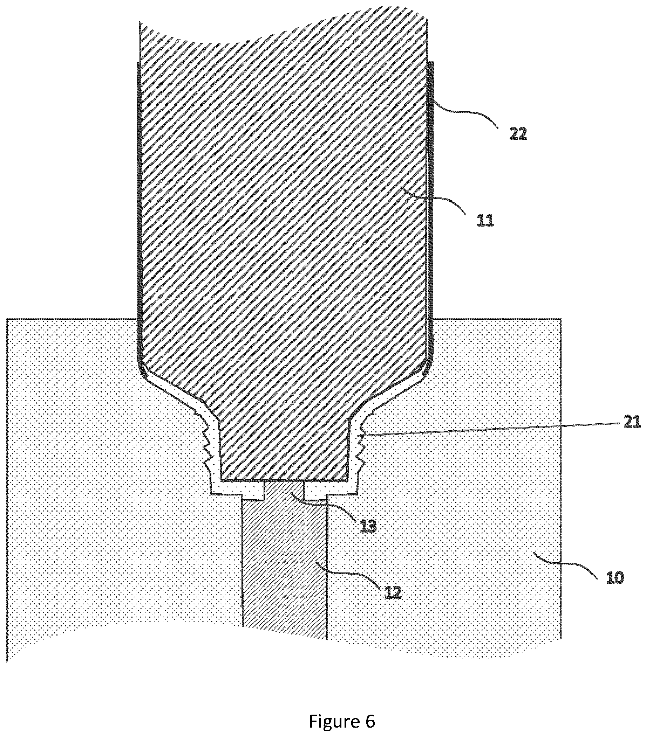

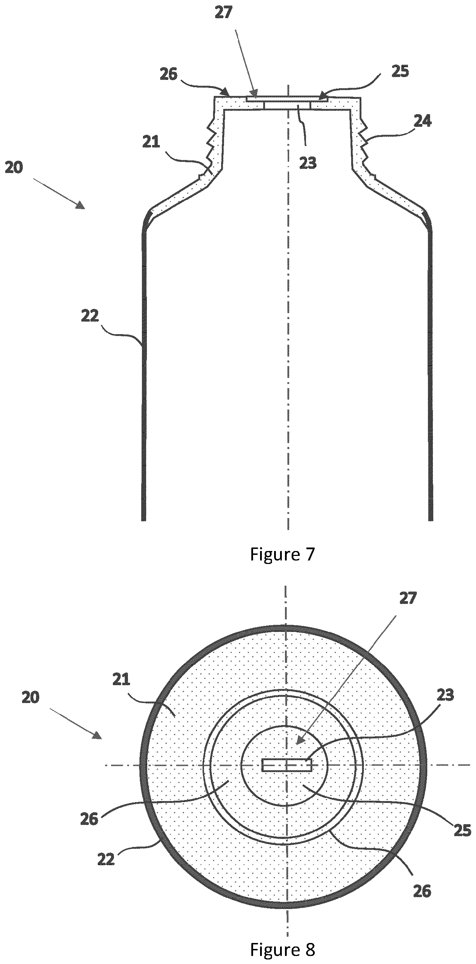

Lors de la formation du tube (dans l'opération de compression moulage de la tête 2 sur la jupe 3, voir par exemple les figures 6 et 7 de WO2007/125481) selon la présente invention l'embout de forme 13 est maintenu en contact avec le mandrin 11 et est entrainé par le mouvement relatif entre la matrice 10 et le mandrin 11 au cours l'opération de compression - moulage.

Plus précisément, la tige d'orifice 12 n'a plus une forme (en section) continue comme dans WO2007/125481 mais comprend à son extrémité en contact avec le mandrin 11 un embout de forme 13 qui est utilisé pour créer la géométrie de l'orifice 23 du tube. Avec cette construction, il est possible de créer n'importe quelle forme d'orifice 23 du tube (ou de la tête de tube), sans modification notable de la tige 12. L'embout 13 peut être formé directement dans la matière de la tige ou alors être une pièce rapportée (par exemple vissée, soudée ou collée etc.). La matière peut être la même ou une matière différente.

Une force est exercée sur la tige 12 pour maintenir le contact entre l'embout de forme 13 et le mandrin 11 pendant l'opération de moulage et éviter que de la matière fondue ne s'insère entre le mandrin 11 et l'embout 13.

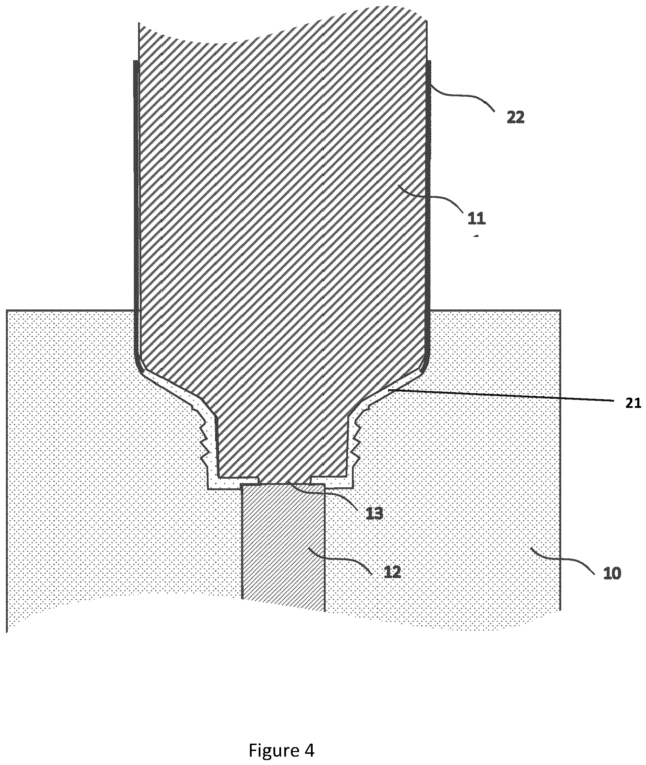

La figure 4 illustre un autre mode d'exécution dans lequel l'embout de forme 13 est fixé sur le mandrin 11 (comme une pièce rapportée et fixée par collage, soudure ou vissage etc. par exemple) ou fait partie du mandrin 11. Le principe est le même que celui décrit en référence à la figure 3.

Dans des variantes, l'embout de forme 13 peut être en plusieurs parties, par exemple en deux parties (ou plus), dont l'une au moins se trouve sur le mandrin 11 et l'autre sur la tige 12.

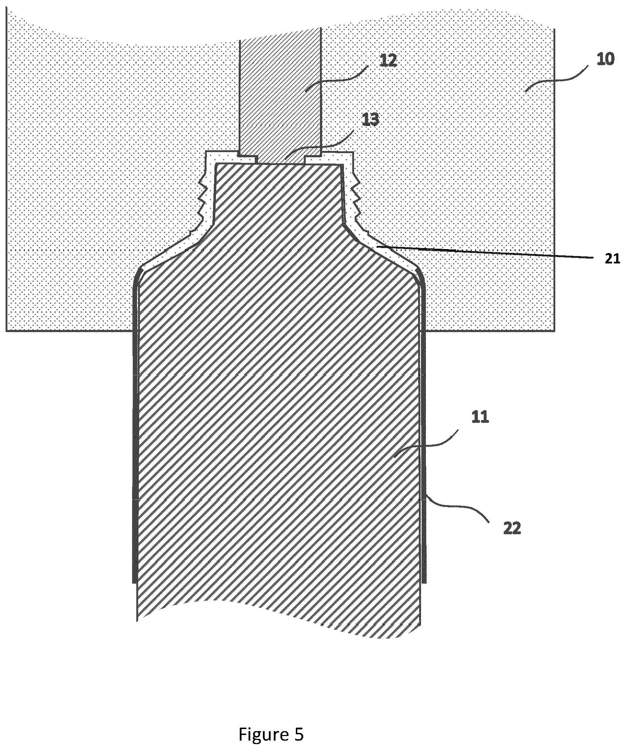

La figure 5 illustre un mode d'exécution d'un dispositif dans lequel la dose de matière plastique est déposé sur le mandrin 11. Le principe de fonctionnement est le même que celui des figures 3 ou 4, le dispositif étant simplement retourné de 180°, le mandrin 11 étant en bas et la matrice 10 en haut. L'embout de forme 13 peut être placé sur le mandrin 11 ou sur la tige 12 ou en partie sur l'un et en partie sur l'autre.

La figure 6 illustre le dispositif de la figure 3 mais dans une autre configuration : dans cette figure 6, la longueur de l'embout de forme 13 selon l'axe de la tige 12 est plus grande que l'épaisseur ciblée de la tête de tube au niveau de la surface périphérique 26 de sorte que la forme de la tête de tube sera différente, comme expliqué ci-dessous.

Les figures 7 et 8 illustrent un tube 20 selon un mode d'exécution de l'invention obtenu par exemple avec le dispositif illustré dans les figures 3 à 5. Ce tube 20 a une géométrie d'orifice 23 de section rectangulaire (voir la figure 8), ce qui est avantageux pour délivrer un produit en fine épaisseur par exemple. Le tube 20 selon l'invention présente d'une part l'avantage de la qualité de la zone de transition entre la jupe 22 et la tête de tube 21 qui forme une surface continue sans aspérité découlant du procédé de compression-moulage utilisé et décrit ci-dessus et d'autre part l'avantage de présenter une géométrie d'orifice complexe de section non circulaire plus adaptée à l'extraction du produit dans l'application prévue. De façon générale, l'embout de forme 13 possède donc une forme correspondant à celle de la géométrie 23 de manière à former cette géométrie lors du processus de compression-moulage.

Selon ce mode d'exécution d'un tube selon l'invention illustré figures 7 et 8, la face avant du goulot de la tête de tube 21 comprend une surface centrale 25 et une surface périphérique 26 qui sont décalées l'une par rapport à l'autre. L'orifice 23 débouche dans la partie centrale du goulot au niveau de la surface centrale 25 dans un creux 27 formé par le décalage relatif des surfaces 25 et 26 comme cela est visible dans la figure 6.

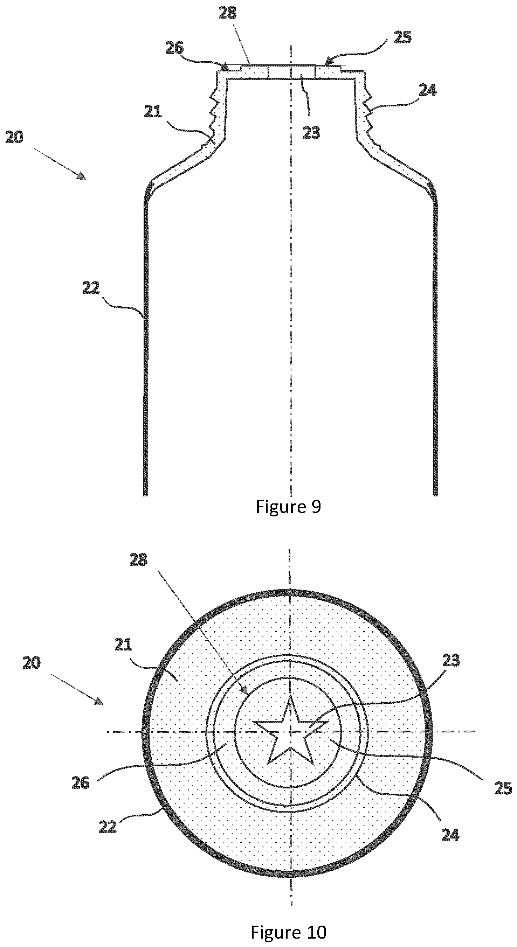

Les figures 9 et 10 illustrent un autre mode d'exécution d'un tube selon l'invention obtenu par exemple par le dispositif illustré en figure 6. Dans ce mode d'exécution, le tube 1 présente une géométrie d'orifice 23 en forme d'étoile pouvant être utilisée à des fins marketing par exemple.

Selon ce mode d'exécution illustré figures 9 et 10, la face avant du goulot de la tête de tube 21 comprend une surface centrale 25 et une surface périphérique 26 qui sont décalées l'une par rapport à l'autre mais dans un sens inverse à celui des figures 3 et 4. L'orifice 4 débouche dans la partie centrale du goulot au niveau de la surface centrale 25 sur une excroissance 28 formée par le décalage des surfaces 25 et 26. La formation d'un creux 27 ou d'une excroissance 28 est réalisée par la longueur de l'embout 13 par rapport à l'épaisseur ciblée de l'épaule au niveau de la surface périphérique 26 : comme dans la figure 3 pour réaliser un creux 27 ou comme dans la figure 6 pour réaliser une excroissance 28.

En effet, comme la tige 12 et le mandrin 11 sont toujours dans la même position pressée l'un contre l'autre, il est possible de former un creux 27 ou une excroissance 28 uniquement en ajustant la longueur de l'embout 13 par rapport à l'épaisseur de l'épaule.

Selon des modes d'exécution de l'invention, lorsque le décalage entre les surfaces 25 et 26 forme un creux 27 (par exemple comme illustré dans la figure 7), la valeur du décalage entre les surfaces 25 et 26 est inférieure à 5mm et de préférence inférieure à 0.5mm.

Selon des modes d'exécution de l'invention, lorsque le décalage entre les surfaces 7 et 9 forme une excroissance 28 (par exemple comme illustré dans la figure 9), la valeur du décalage entre les surfaces 25 et 26 est inférieure à 10mm et de préférence inférieure à 0.5mm.

Selon des modes d'exécution de l'invention, le décalage entre les surfaces 25 et 26 est proche de zéro. Dans ces modes la valeur du décalage est inférieure à 0,4mm dans les deux directions ("en creux" et en "excroissance") et de préférence inférieure à 0,2mm.

Les tubes obtenus selon l'invention, se caractérisent notamment par le fait que l'épaisseur de la paroi du tube mesurée au niveau de la surface centrale 7 sur un grand nombre de tube de la même production varie très peu, tandis que l'épaisseur mesurée au niveau de la surface périphérique sur les mêmes échantillons varie davantage.

Selon l'invention, il s'avère que l'épaisseur mesurée au niveau de la surface centrale 7 ne dépend pas des variations de masse de la dose de résine utilisée pour mouler la tête de tube, tandis que la variation de l'épaisseur de la paroi au niveau de la surface 9 dépend des variations de la masse de la dose.

En conséquence, soit le moule est conçu pour que la tête de tube présente une excroissance 28 avec de faibles variations qui dépendent des variations de masse de la dose comme illustrée en figure 9 et avec un dispositif tel qu'illustré en figure 6 ; soit le moule est conçu pour que la tête de tube présente un creux 27 avec de faibles variations qui dépendent des variations de masse de la dose comme illustré en figure 7 et avec le dispositif dans la configuration de la figure 3.

Ainsi, la présente invention permet de s'affranchir des variations de quantité de matière de la dose et de les compenser directement lors du procédé de compression moulage selon la présente invention pour obtenir un produit sans défaut.

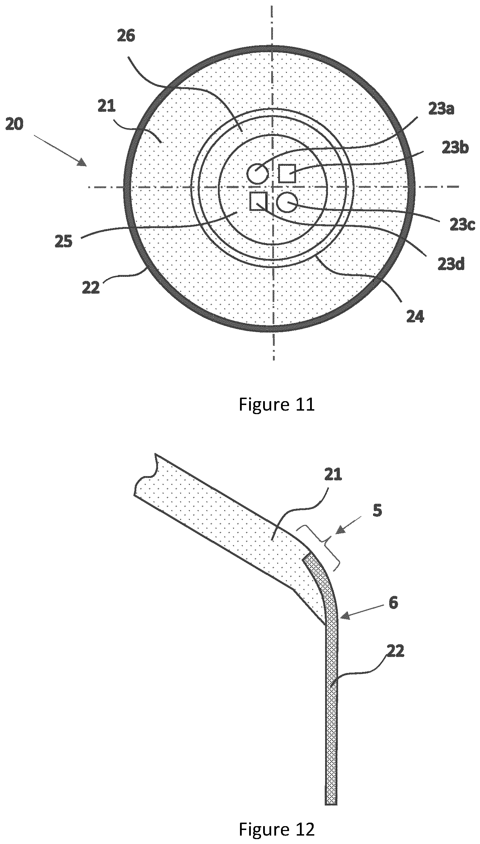

La figure 11 illustre un autre mode d'exécution de l'invention. Dans ce mode, le tube 20 présente une multiplicité d'orifices 23a, 23b, 23c et 23d. Dans ce mode, les orifices 23a et 23c ont une géométrie de section circulaire et les orifices 23b et 23d ont une géométrie de section carrée. D'autres configurations peuvent bien entendu être envisagées tant au niveau du nombre d'orifices que de leur forme ou de leur taille. Ces orifices sont formés par l'embout de forme 13 qui peut se trouve sur la tige 13, sur le mandrin 11 ou sur les deux. Par exemple, on peut envisager que l'embout formant les orifices d'une géométrie soit sur l'un des deux de la tige ou du mandrin et que l'embout formant les orifices d'une autre géométrie soit sur l'autre de la tige ou du mandrin. Bien entendu, d'autres configuration sont possibles en fonction des circonstances, des formes désirées etc.

Toute forme peut être donnée à l'orifice en utilisant les principes de la présente invention tels que décrits dans la présente demande et l'invention n'est pas limitée à celles illustrées à titre d'exemples non-limitatifs.

La figure 12 illustre une caractéristique des tubes réalisés 21 selon l'invention qui est aussi une caractéristique des tubes de l'art antérieur dont la tête est moulée par compression moulage. Ces tubes 21 présentent une zone de transition 5 entre la jupe 3 et la tête 2 de grande qualité. Ces tubes 21 se caractérisent par le fait que la surface externe 6 est parfaitement continue et sans aspérités dans la zone 5 ce qui est une caractéristique préférée dans le cadre de la présente invention pour les raisons exposées ci-dessus.

Les tubes peuvent être par exemple de section circulaire ou ovale ou elliptique, ou oblongue, ou carrée et les principes de la présente invention s'appliques à toutes formes de tubes.

Les dispositifs décrits et illustrés sont simplifiés pour clarifier l'exposé. Ces dispositifs comprennent notamment des moyens de démoulage, de moyens d'ouverture et de fermeture, des moyens de refroidissement des moyens de moulage par compression, des moyens de chargement et maintien de la jupe du tube, des moyens de réception et guidage de la dose de matière plastique qui ne sont pas représentés mais connus en principe dans l'état de la technique.

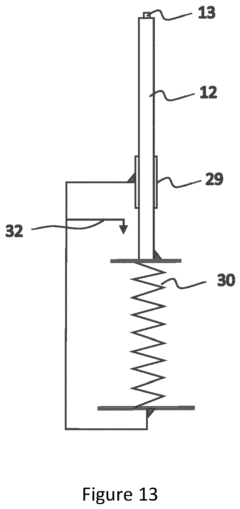

Les figures 13 à 17 illustrent des modes d'exécution de moyens utilisés pour réaliser le dispositif et le procédé selon l'invention. Dans ces exemples seules les parties fonctionnelles liées à l'invention sont représentées par souci de simplification.

La figure 13 illustre un premier mode d'exécution de moyens utilisés pour réaliser l'invention. Dans ce mode, le dispositif comporte notamment des moyens qui permettent de maintenir en contact pendant l'opération de moulage-compression le mandrin 11 et la tige d'orifice 12 via l'embout de forme 13. En particulier de tels moyens sont préférablement mis en œuvre pour éviter que de la matière moulée ne s'insère entre l'embout de forme 13 et le mandrin 11. Un premier mode illustré en figure 13 comprend un élément passif comme un ressort mécanique ou pneumatique 30 pour réaliser cette fonction. Une alternative non représentée peut utiliser un élément actif comme un vérin de préférence piloté en pression. Cette solution permet d'ajuster l'effort axial sur la tige d'orifice 12 en fonction des efforts mis en jeu lors du moulage. Comme l'illustre la figure 13, le dispositif comprend également des moyens de guidage 29 qui permettent le mouvement axial de la tige d'orifice 12 ainsi qu'une butée de sortie de tige 32 qui permet de régler l'amplitude du mouvement axial de la tige 12. Dans le cas où l'élément 30 est un vérin, un capteur de fin de course est avantageusement utilisé comme butée de fin de course. Le dispositif illustré figure 13 est avantageusement utilisé dans la configuration de moulage illustrée figure 5 selon laquelle une dose est déposée sur le mandrin.

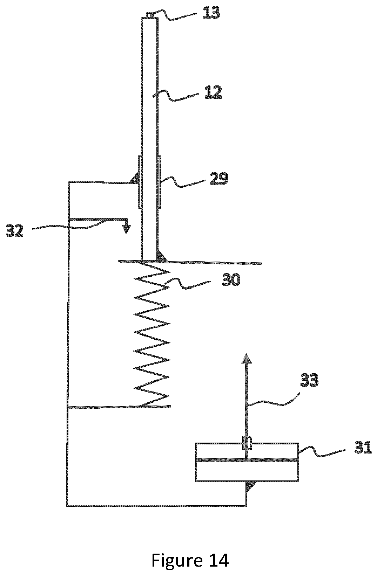

Le mode d'exécution illustré en figure 14 comprend au moins un premier élément de mise en pression 30 et un deuxième élément de mise en pression 31. Ce mode est avantageusement utilisé quand la tige d'orifice12 a une course axiale importante. C'est le cas, lorsque la tige d'orifice 12 est utilisée pour centrer la dose dans la cavité 10 lors de la phase de dosage. Le premier élément de mise en pression 30 permet de mettre en contact l'embout de forme 13 et le mandrin 11 pendant la fermeture du moule. Le deuxième élément de mise en pression 31 permet d'exercer une pression élevée en fin de moulage afin d'éviter que la résine moulée ne vienne s'insérer entre le mandrin 11 et l'embout de forme 13. Comme la pression en fin de moulage est élevée, il est nécessaire d'exercer une pression suffisante pour éviter de boucher l'orifice 23 de l'emballage. Le premier élément de mise en pression 30 peut être un élément passif comme un ressort mécanique ou pneumatique tel qu'illustré figure 14. Alternativement cet élément peut être piloté activement comme un vérin. Le second élément de mise en pression 31 est avantageusement un vérin de faible course tel qu'illustré figure 14. Un tel vérin permet d'ajuster facilement la pression de retenue de la tige d'orifice 12 en fonction de la pression de moulage. Alternativement cet élément 31 peut être un ressort passif de rigidité élevée. Le dispositif illustré figure 14 comprend également une butée de sortie de tige 32 qui limite la course de sortie de la tige d'orifice 12; et une butée de transition 33 qui permet de commuter de la faible pression exercée par le premier élément de mise en pression 30 à la haute pression exercée par le second élément de mise en pression 31. Selon le mode d'exécution illustré figure 14, le premier élément de mise en pression 30 est disposé en parallèle avec second élément de mise en pression 31.

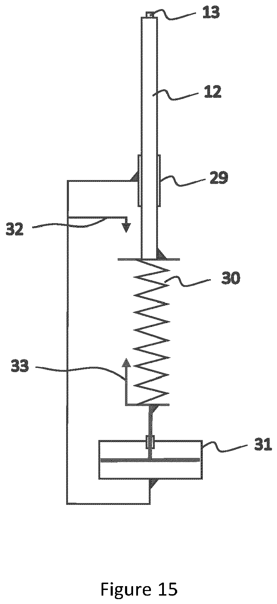

La figure 15 illustre un mode d'exécution similaire à celui de la figure 14 mais dans lequel le premier élément de mise en pression 30 est disposé en série avec le second élément de mise en pression 31.

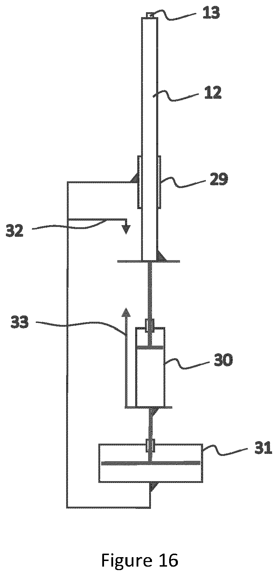

La figure 16 illustre un mode d'exécution similaire à celui de la figure 15 mais dans lequel le premier élément de mise en pression 30 et le second élément de mise en pression 31 sont des vérins dont la pression peut être ajustée. La figure 16 illustre un mode d'exécution ou le premier élément de mise en pression 30 et le second élément de mise en pression 31 sont en série. Un autre mode d'exécution (non illustré) peut être réalisé dans lequel les vérins de mise en pression 30 et 31 sont disposés en parallèle.

Les modes d'exécution illustrés en figures 14, 15 et 16 sont avantageusement associés aux configurations de moulage illustrées figures 3, 4 et 6 dans lesquels la tige d'orifice est également utilisée pour centrer la dose lors de l'opération de dosage.

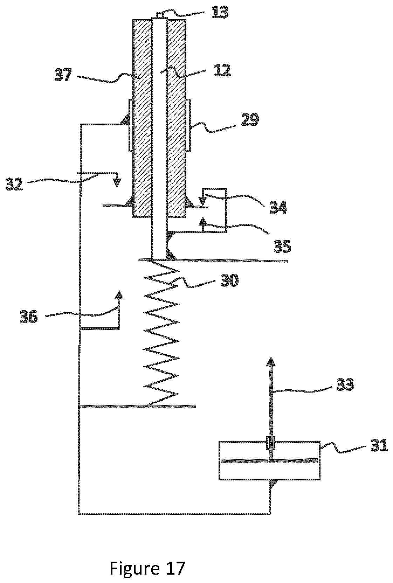

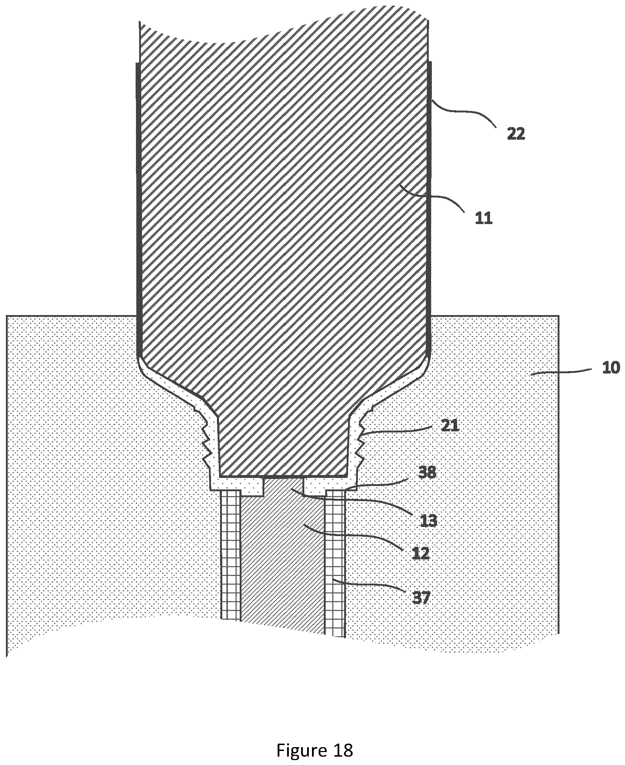

Le mode d'exécution illustré en figure 17 est similaire à celui illustré en figure 14 mais comprend en plus une douille 37 utilisée pour centrer la dose lors de l'opération de dosage. L'utilisation d'une telle douille 37 est avantageuse lorsque le diamètre interne de la dose (qui a généralement une forme torique) est grand par rapport au diamètre de la tige d'orifice. La douille de dosage s'aligne avec la cavité du moule comme illustré en figure 18. La butée d'alignement douille-matrice 36 permet d'assurer cette fonction. Les butées de position relative tige-douille 34 définissent le mouvement relatif maximal entre la tige d'orifice 32 et la douille 37. Selon le mode d'exécution illustré en figure 17, les éléments de mise en pression 30 et 31 sont disposés en parallèle. Un dispositif similaire (non illustré) dans lequel les éléments de mise en pression 30 et 31 sont en série peut également être utilisé.

La figure 18 illustre la configuration de moulage correspondant au dispositif illustré en figure 17. En fin de moulage, la position axiale de la douille 37 est définie par l'alignement douille-matrice 38 qui permet d'obtenir une surface de tête sans épaulement à la jonction de la matrice 10 et de la douille 37.

Dans les figures 3 à 6, 7, 9 et 18 on a représenté respectivement un dispositif pour former une tête de tube et un tube (c'est-à-dire une tête de tube 21 attachée à une jupe 22) mais il est évident que le principe de la présente invention s'applique à la fabrication d'une tête de tube 21 seule sans la jupe et la présente invention couvre cet aspect également de fabrication d'une tête de tube par compression moulage. La représentation de la jupe est donc un mode d'exécution non-limitatif.

Les modes d'exécution décrits le sont à titre d'exemples illustratifs et ne doivent pas être considérés comme limitatifs. D'autres modes d'exécution peuvent faire appel à des moyens équivalents à ceux décrits par exemple. Les modes d'exécution peuvent également être combinés entre eux en fonction des circonstances, ou des moyens utilisés dans un mode peuvent être utilisés dans un autre mode.

## Revendications

1. Dispositif de moulage d'un article dans lequel l'article est obtenu par compression-moulage d'une dose (14) de matière à l'état fondu et comprend au moins un orifice (23) après l'opération de compression-moulage, ledit dispositif comprenant au moins une matrice (10), un mandrin (11) coopérant avec ladite matrice (10) pour effectuer l'opération de compression moulage de la dose et une tige d'orifice (12) coulissant dans ladite matrice (10), ledit dispositif comprenant en outre un embout de forme (13) placé entre le mandrin (11) et la tige d'orifice (12) pour former l'orifice (23) de l'article.

2. Dispositif selon la revendication 1, dans lequel l'embout de forme est sur la tige (12), ou sur le mandrin (11) ou partiellement sur la tige et partiellement sur le mandrin.

3. Dispositif selon l'une des revendications précédentes, ledit dispositif comprenant au moins un moyen (30) pour maintenir en contact le mandrin (11) et la tige d'orifice (12) au travers de l'embout de forme (13).

4. Dispositif selon la revendication 3 dans lequel le moyen est un ressort mécanique ou pneumatique (30).

5. Dispositif selon l'une des revendications précédentes, ledit dispositif comprenant une butée de sortie de tige (32) réglant l'amplitude du mouvement axial de la tige (12).

6. Dispositif selon l'une des revendications précédentes, ledit dispositif comprenant un deuxième élément de mise en pression (31) pour exercer une pression élevée en fin de moulage, ledit deuxième élément étant un vérin de faible course.

7. Dispositif selon la revendication précédente, ledit dispositif comprenant une butée de transition pour commuter de la faible pression exercée par le premier élément de mise en pression à la haute pression exercée par le deuxième élément de mise en pression.

8. Dispositif selon l'une des revendications précédentes, ledit dispositif comprenant une douille (37) pour centrer la dose.

9. Procédé de formation d'un article avec un orifice à partir d'une dose (14) de matière à l'état fondu, ledit procédé utilisant une matrice (10) coopérant avec un mandrin (11), une tige d'orifice (12) et un embout de forme (13) placé entre le mandrin (11) et la tige d'orifice (13), l'article étant formé par compression-moulage de la dose entre la matrice et le mandrin et l'orifice de l'article étant créé par l'embout de forme entouré de matière lors de l'opération de compression-moulage.

10. Procédé selon la revendication 9, dans lequel on utilise un premier moyen de mise en pression pour mettre en contact l'embout de forme, le mandrin et la tige d'orifice lors de la fermeture du moule et un deuxième moyen pression pour exercer une pression élevée en fin de moulage.

11. Procédé selon la revendication 9 ou 10, dans lequel on utilise une butée de transition pour commuter de la pression exercée par le premier moyen de mise en pression à la pression exercée par le deuxième moyen de mise en pression.

12. Article (1,2) comprenant au moins une surface centrale (25), une surface périphérique (26) et un orifice (23) formé par un embout de forme (13), ledit orifice (23) débouchant dans la surface centrale (25) et lesdites surfaces centrale et périphérique (25,26) étant décalées l'une par rapport à l'autre.

13. Article selon la revendication 12, ledit décalage entre lesdites surfaces formant un creux (27) ou une excroissance (28).

14. Article selon l'une des revendications 12 ou 13, ledit orifice (23) comprenant au moins deux orifices distincts (23a,23b,23c,23d) ayant une même géométrie ou une géométrie différente.

15. Article selon l'une des revendications 12 à 14, ledit article étant une tête de tube ou un tube.
